# EUROPEAN PATENT SPECIFICATION

(11) **EP 0 407 360 B1**
(45) Date of publication and mention of the grant of the patent: **31.08.1994**
(21) Application number: 90830300.1
(22) Date of filing: 03.07.1990
(51) Int. Cl.: F16F 9/38, B60G 15/06

(54) **Suspension member for motor vehicles**
Aufhängungselement für Kraftfahrzeuge
Elément de suspension pour un véhicule à moteur

(30) Priority: 05.07.1989 IT 5322089 U
(43) Date of publication of application: 09.01.1991
(73) Proprietor: FIAT AUTO S.p.A., 10135 Torino (IT)
(72) Inventor: Evangelisti, Raffaele, I-10141 Torino (IT)
(74) Representative: Quinterno, Giuseppe

(56) References cited:
- FR-A- 1 439 477
- FR-A- 1 591 278
- GB-A- 895 798
- US-A- 3 385 589
- US-A- 4 771 996
- PATENT ABSTRACTS OF JAPAN, vol. 11, no. 388 (M-652)[2835], 18th December 1987;& JP-A-62 155 345 (DAIHATSU) 10-07-1987

## Description

The present invention relates to a suspension member for motor vehicles, comprising:
- a telescopic shock absorber having a body from which a rod projects in a sealed manner, respective support plates being fixed to the body and to the rod,
- a helical spring constituted by a wire whose ends are not surfaced in a planar surface and whose ends press against the inner faces of the support plates, and
- a tubular protection member of bellows form surrounding the zone of sealing between the rod and the body of the shock absorber,
wherein each end of the protection member has an outer surface which adheres to the inner face of the respective support plate and an inner surface against which the end of the respective spring bears.

A suspension member if the type specified above is known from the document FR-A-1 591 278. Said document shows a helical spring coaxially mounted on a telescopic shock absorber which carries a pair of support plates. An end portion of a tubular protection member is interposed between each end of the spring and the respective support plate.

It has already been proposed (see for example US-A-3 385 589) to use support plates with helical abutment surfaces for the ends of a helical spring whose ends are not surfaced in a planar surface. In this case, there is at least an angular portion of the support plate where the helical spring does not act. Therefore, along this portion the end of the tubular protection member would not be pressed against the support plate and there could be problems with the protecting action of the bellow element.

The object of the present invention is to provide a suspension member of the type defined above which enables the protecting characteristics of the bellows member to be improved.

According to the present invention, this object is achieved by the formation of a suspension member of the type specified above such that each end of the protection member has a sealing lip at least in correspondence with the angular portion of the support plate against which the helical spring does not act, which sealing lip extends beyond the outer edge of the respective support plate and is directed along a direction substantially parallel to the longitudinal axis of the spring.

Other characteristics and advantages of the present invention will become apparent from the detailed description which follows, made with reference to the appended drawings, provided purely by way of non-limiting example, in which:
Figure 1 is an axial section of a suspension member according to the invention,
Figure 2 is a plan view of part of the suspension member of Figure 1,
Figures 3 and 4 are partial side elevations of the upper portion and the lower portion respectively of the suspension member of Figure 1, and
Figures 5 and 6 are sections taken on the lines V-V and VI-VI respectively of Figures 3 and 4.

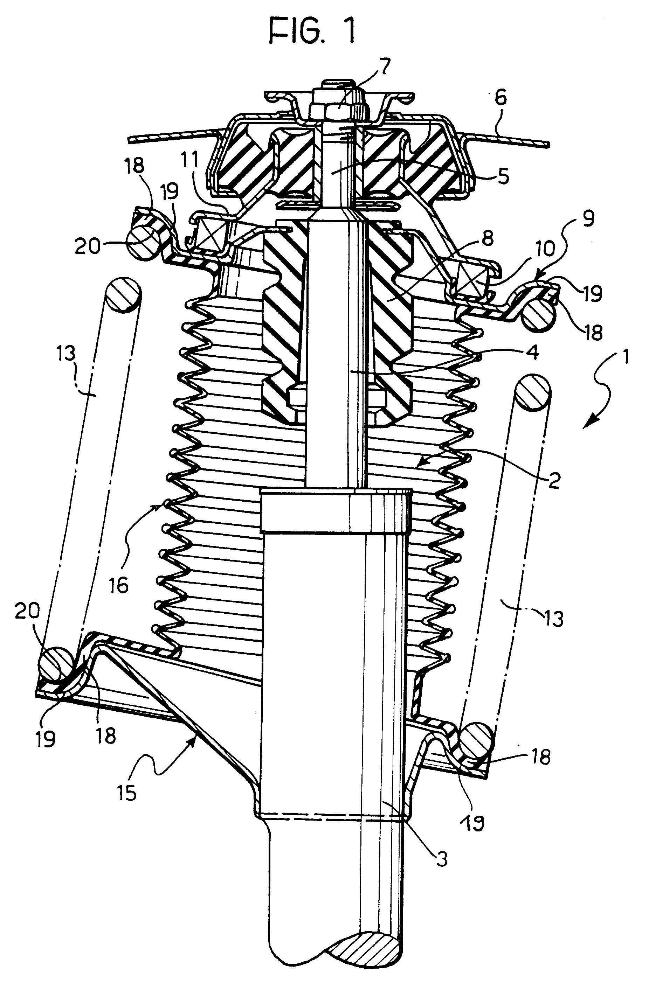

With reference to Figure 1, a suspension member for motor vehicles is indicated 1 and includes a telescopic shock absorber 2 constituted, in known manner, by a body 3 from one end whereof projects a rod 4 in a sealed manner. The upper end 5 of the rod 4 is fixed to the body 6 of the vehicle by means of a nut 7. A rubber, travel-limit stop 8 is fitted on to the rod 4 and an upper support plate 9 is fixed to it. Whenever, as in the embodiment illustrated in Figure 1, the suspension member 1 is intended to be mounted on the front steering wheels of the vehicle, the upper plate 9 carries a thrust bearing 10 which reacts against a metal appendage 11 of the body 6.

The upper end of a helical spring 13 acts against the upper plate 9 while its lower end bears on a lower support plate 15 welded to the body 3 of the shock absorber 2.

A tubular bellows member 16 is interposed between the upper plate 9 and the lower plate 15 and protects the zone of sealing between the rod 4 and the body 3 of the shock absorber 2 from the ingress of dust and dirt. Each end 18 of the protection member 16 is interposed between one end of the helical spring 13 and the inner face of the corresponding support plate 9, 15. Each end 18 of the protection member 16 has an outer surface 19 whose shape corresponds to that of the inwardly facing wall of the respective support plate 9, 15 and the surfaces 19 of the ends 18 are maintained in adherence with the faces of the support plate 9, 15 by the load exerted by the spring 13. The ends 18 of the protection member 16 also have respective inner surfaces 20 whose rounded shapes correspond to that of the round bar constituting the spring 13.

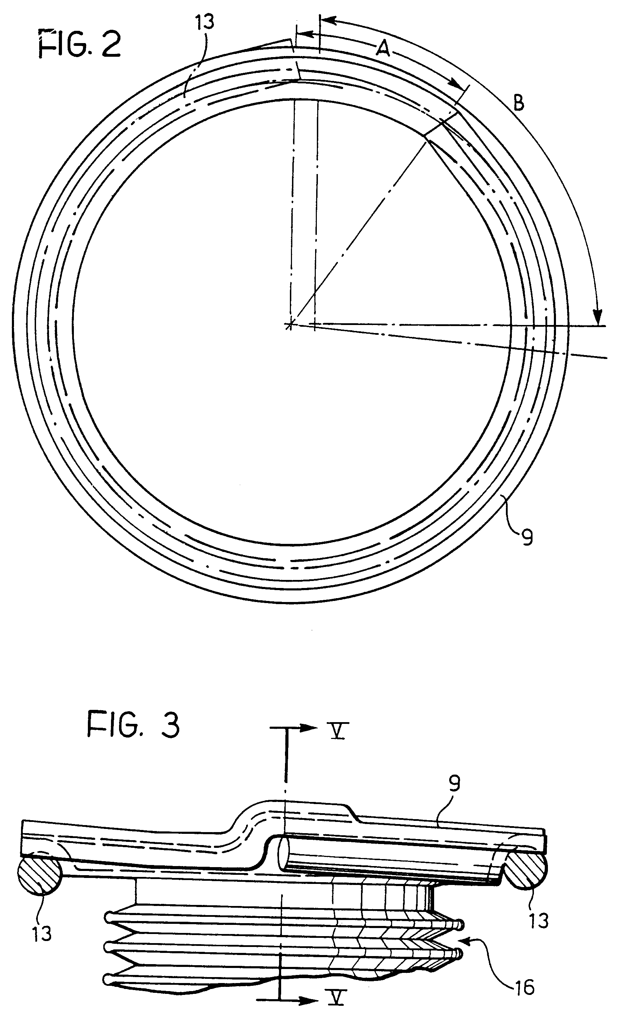

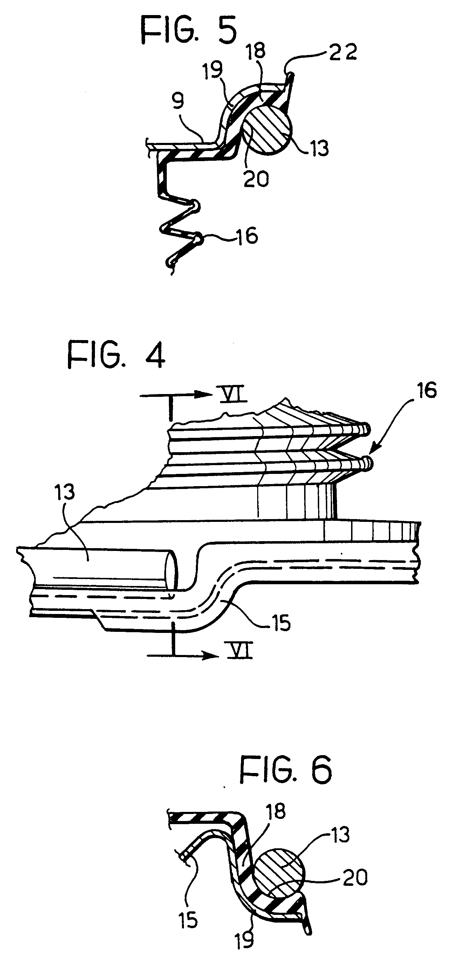

In correspondence with the angular zones in which the metal bar constituting the spring 13 does not touch the support plate 9, 15, indicated A and B respectively in Figure 2, the ends 18 of the protection member 16 have sealing lips 22 each of which extends beyond the outer edge of the respective support plate 9, 15 (see Figures 5 and 6) and improves the sealing between the end 18 and the support plate 9, 15.

As is clear from the above description and from the appended drawings, the particular conformation of the protection member 16 means that the zone of sealing between the rod 4 and the body 3 of the shock absorber 2 is almost sealed and there is no opening through which dust or dirt could penetrate.

## Claims

1. A suspension member for motor vehicles, comprising:
- a telescopic shock absorber (2) having a body (3) from which a rod (4) projects in a sealed manner, respective support plates (15, 19) being fixed to the body (3) and to the rod (4),
- a helical spring (13) constituted by a wire whose ends are not surfaced in a planar surface and whose ends press against the inner faces of the support plates (9, 15), and
- a tubular protection member (16) of bellows form surrounding the zone of sealing between the rod (4) and the body (3) of the shock absorber (2),
wherein each end (18) of the protection member (16) has an outer surface (19) which adheres to the inner face of the respective support plate (9, 15) and an inner surface (20) against which the respective end of the spring (13) bears, characterised in that each end (18) of the protection member (16) has a sealing lip (22) at least in correspondence with the angular portion (A, B) of the support plate (9, 15) against which the helical spring (13) does not act, which sealing lip extends beyond the outer edge of the respective support plate (9, 15) and is directed along a direction substantially parallel to the axis of the spring (13).

## Patentansprüche

1. Aufhängungselement für Kraftfahrzeuge mit:
- einem teleskopischen Stoßdämpfer (2), der ein Gehäuse (3), von dem ein Stab (4) in einer dichtenden Weise vorsteht, jeweilige Trägerplatten (15, 19), die an dem Gehäuse (3) und dem Stab (4) befestigt sind, besitzt,
- einer Schraubenfeder (13), die aus einem Draht gebildet ist, dessen Enden nicht in einer planaren Oberfläche verlaufen und dessen Enden sich gegen die inneren Flächen der Trägerplatte (9, 15) pressen, und
- einem rohrförmigen Schutzteil (16) in Faltenbalgform, das die Zone der Dichtung zwischen dem Stab (4) und dem Gehäuse (3) des Stoßdämpfers (2) umgibt,
wobei jedes Ende (18) des Schutzteils (16) eine äußere Oberfläche (19), die an der inneren Fläche der jeweiligen Trägerplatte (9, 15) anhaftet, und eine innere Oberfläche (20) besitzt, gegen die sich das entsprechende Ende der Feder (13) anlagert, dadurch gekennzeichnet, daß jedes Ende (18) des Schutzteils (16) eine Dichtlippe (22) mindestens entsprechend dem ringförmigen Bereich(A, B)der Trägerplatte (9, 15) besitzt, gegen die die Schraubenfeder (13) nicht einwirkt, wobei sich die Dichtlippe über die äußere Kante der entsprechenden Trägerplatte (9, 15) hinaus erstreckt und entlang einer Richtung im wesentlichen parallel zu der Achse der Feder (13) gerichtet ist.

## Revendications

1. Elément de suspension pour véhicule automobile, comprenant :
- un amortisseur télescopique (2) ayant un corps (3) d'ou une tige (4) émerge à joint étanche, des plaques supports respectives (15, 19) étant fixées au corps (3) et à la tige (4),
- un ressort hélicoïdal (13) constitué par un fil dont les extrémités ne sont pas surfacées en une surface plane et dont les extrémités pressent contre les faces intérieures des plaques supports (9, 15), et
- un élément de protection tubulaire (16) en forme de soufflet, qui entoure la zone de joint étanche entre la tige (4) et le corps (3) de l'amortisseur (2),
dans lequel chaque extrémité (18) de l'élément de protection (16) possède une surface extérieure (19) qui adhère à la face intérieure de la plaque support (9, 15) respective et une surface intérieure (20) contre laquelle porte l'extrémité du ressort respectif (13), caractérisé en ce que chaque extrémité (18) de l'élément de protection (16) présente une lèvre d'étanchéité (22), au moins au droit de la portion angulaire (A, B) de la plaque support (9, 15) contre laquelle le ressort hélicoïdal (13) n'agit pas, laquelle lèvre d'étanchéité se prolonge au-delà du bord extérieur de la plaque support (9, 15) respective et est dirigée selon une direction sensiblement parallèle à l'axe de ressort (13).
